# EUROPEAN PATENT APPLICATION

(11) **EP 4 848 738 A1**
(43) Date of publication of application: **02.12.2026**
(21) Application number: 25744631.0
(22) Date of filing: 22.01.2025
(51) Int. Cl.: H04N 21/472

(54) **METHOD AND APPARATUS FOR CREATING MEDIA CONTENT, DEVICE, AND STORAGE MEDIUM**

(30) Priority: 24.01.2024 CN 202410103171
(71) Applicant: Beijing Zitiao Network Technology Co., Ltd., Beijing 100190 (CN)
(72) Inventor: WANG, Yicheng, Beijing 100028 (CN); ZHAO, Liyan, Beijing 100028 (CN)
(74) Representative: Marks & Clerk LLP
(86) International application number: PCT/CN2025/074060
(87) International publication number: WO 2025/157193

(57) **Abstract**

Embodiments of the disclosure relate to a method, apparatus, device, and storage medium for creating media content. The method proposed includes: displaying a target interface including a creation entry associated with a set of posted works; and providing media content based on a selection of the creation entry in the target interface, the media content including at least a target image, the target image including a plurality of visual elements corresponding to visual content of a plurality of works in the set of works.

## Description

The present application claims priority to Chinese Patent Application No. 202410103171.0, filed on January 24, 2024, and entitled "METHOD, APPARATUS, DEVICE, AND STORAGE MEDIUM FOR CREATING WORKS", which is incorporated herein by reference in its entirety.

### TECHNICAL FIELD

Example embodiments of the disclosure generally relate to the field of computers, and in particular, to a method, apparatus, device, and computer-readable storage medium for creating media content.

### BACKGROUND

With the development of computer technologies, the Internet has become an important platform for people to exchange information. People may, for example, create or share various types of works via the Internet.

### SUMMARY

In a first aspect of the disclosure, a method for creating media content is provided. The method includes: displaying a target interface including a creation entry associated with a set of posted works; and providing media content based on a selection of the creation entry in the target interface, the media content including at least a target image, the target image including a plurality of visual elements corresponding to visual content of a plurality of works in the set of works.

In a second aspect of the disclosure, an apparatus for creating media content is provided. The apparatus includes: a displaying module configured to display a target interface including a creation entry associated with a set of posted works; and a providing module configured to provide media content based on a selection of the creation entry in the target interface, the media content including at least a target image, the target image including a plurality of visual elements corresponding to visual content of a plurality of works in the set of works.

In a third aspect of the disclosure, an electronic device is provided. The device includes at least one processing unit; and at least one memory coupled to the at least one processing unit and storing instructions executable by the at least one processing unit, the instructions, when executed by the at least one processing unit, causing the device to perform the method of the first aspect.

In a fourth aspect of the disclosure, a computer-readable storage medium is provided. The computer-readable storage medium has a computer program stored thereon, the computer program being executable by a processor to perform the method of the first aspect.

It would be appreciated that the content described in the Summary section of the disclosure is neither intended to identify key or essential features of embodiments of the disclosure, nor is it intended to limit the scope of the disclosure. Other features of the disclosure will be readily envisaged through the following description.

### BRIEF DESCRIPTION OF THE DRAWINGS

The above and other features, advantages and aspects of the embodiments of the disclosure will become more apparent when taken in conjunction with the drawings and with reference to the following detailed description. In the drawings, the same or similar reference symbols refer to the same or similar elements, in which:
Fig. 1 illustrates a schematic diagram of an example environment in which an embodiment according to the disclosure may be implemented;
Fig. 2A to Fig. 2C illustrate example interfaces according to some embodiments of the disclosure;
Fig. 3A and Fig. 3B illustrate example interfaces according to some embodiments of the disclosure;
Fig. 4 illustrates a flowchart of an example process for creating media content according to some embodiments of the disclosure;
Fig. 5 illustrates a schematic structural block diagram of an example apparatus for creating media content according to some embodiments of the disclosure; and
Fig. 6 illustrates a block diagram of an electronic device capable of implementing multiple embodiments of the disclosure.

### DETAILED DESCRIPTION OF EMBODIMENTS

Embodiments of the disclosure are described in more detail hereinafter with reference to the drawings. The drawings illustrate some embodiments of the disclosure, but it would be appreciated that the disclosure may be implemented in various manners and should not be construed as limited to the embodiments set forth herein. On the contrary, these embodiments are provided for more thorough and complete understanding of the disclosure. It would be appreciated that the drawings and embodiments of the disclosure are only for illustrative purposes and are not intended to limit the protection scope of the disclosure.

It would be noted that any section/subsection titles provided herein are not limiting. Various embodiments are described throughout this disclosure, and any type of embodiments may be included under any section/subsection. Further, the embodiments described in any section/subsection may be combined with any other embodiments described in the same section/subsection and/or different sections/subsections in any manner.

In the description of the embodiments of the disclosure, the term "include/comprise" and like terms are to be construed as open-ended inclusions, namely, "include/comprise but not limited to". The term "based on" is to be construed as " based at least in part on". The term "one embodiment" or "the embodiment" is to be construed as "at least one embodiment". The term "some embodiments" is to be construed as "at least some embodiments". Other definitions, either explicit or implicit, may also be included below. The terms "first", "second" and the like may refer to different or same objects. Other definitions, either explicit or implicit, may also be included below.

The embodiments of the disclosure may involve user data, collection and/or use of data, and the like. These aspects comply with corresponding laws, regulations and related provisions. In the embodiments of the disclosure, all data collection, acquisition, processing, forwarding, use and the like are performed on the premise that the user is aware of and confirms. Accordingly, when implementing the embodiments of the disclosure, the user should be informed of the type, scope of use, usage scenarios, and the like, of possible data or information involved and authorization should be obtained from the user in an appropriate manner in accordance with relevant laws and regulations. The specific method of informing and/or obtaining authorization may vary according to actual situations and application scenarios, and the scope of the disclosure is not limited in this regard.

If personal information processing is involved in the solutions and embodiments in the specification, it will be performed on the premise that there is a legal basis (for example, after obtaining consent of the personal information subject, or necessary to perform a contract, etc.), and will only be performed within the prescribed or agreed scope. If the user refuses to provide personal information other than the necessary information required for the basic functions, it will not affect the user's ability to use the basic functions.

As mentioned above, people expect to be able to share multiple posted works. However, traditional solutions are difficult to support users in quickly sharing content of multiple works. For example, a user may need to import multiple works into editing software in order to create a new work.

Embodiments of the disclosure proposes a solution for posting works. According to the solution, a target interface may be displayed, where the target interface includes a creation entry associated with a set of posted works. Further, media content may be provided based on a selection of the creation entry in the target interface, where the media content includes at least a target image, the target image includes a plurality of visual elements, and the plurality of visual elements correspond to visual content of a plurality of works in the set of works.

In this way, the embodiments of the disclosure are able to efficiently create a new work based on multiple posted works and can express content of the multiple works simultaneously.

Various example embodiments of the solution are described in more detail hereinafter in conjunction with the drawings.

### Example Environment

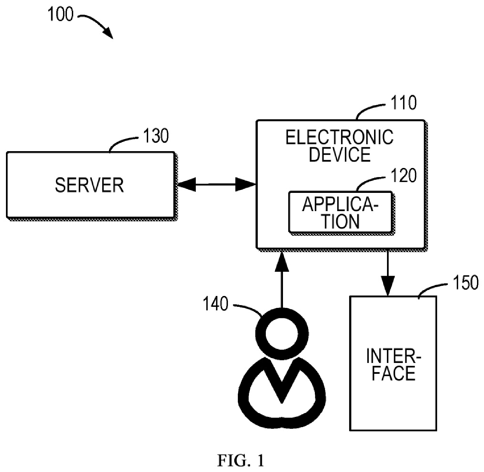

Fig. 1 shows a schematic diagram of an example environment 100 in which the embodiments of the disclosure may be implemented. As shown in Fig. 1, the example environment 100 may include an electronic device 110.

In the example environment 100, an application 120 supporting interface interaction may run on the electronic device 110. The application 120 may be any appropriate type of application for interface interaction, examples of which may include but are not limited to a video application, a social application, or other appropriate applications. A user 140 may interact with the application 120 via the electronic device 110 and/or its attached devices.

In the environment 100 of Fig. 1, if the application 120 is active, the electronic device 110 may present an interface 150 for supporting interface interactions via the application 120.

In some embodiments, the electronic device 110 communicates with a server 130 to implement the provision of services of the application 120. The electronic device 110 may be any type of mobile terminal, fixed terminal or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the foregoing, including the fittings and peripherals of these devices or any combination thereof. In some embodiments, the electronic device 110 may also support any type of user-specific interface (such as "wearable" circuitry, etc.).

The server 130 may be an independent physical server, a server cluster or distributed system composed of multiple physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 130 may include, for example, a computing system/server, such as a mainframe, an edge computing node, a computing device in a cloud environment, and the like. The server 130 may provide backstage services for the application 120 supporting a virtual scene in the electronic device 110.

A communication connection may be established between the server 130 and the electronic device 110. The communication connection may be established by wired or wireless means. The communication connection may include, but is not limited to, a Bluetooth connection, a mobile network connection, a universal serial bus (USB) connection, a wireless fidelity (WiFi) connection, etc., and the embodiments of the disclosure are not limited in this regard. In the embodiments of the disclosure, the server 130 and the electronic device 110 may implement signaling interaction through the communication connection therebetween.

It would be appreciated that the structure and function of each element in the environment 100 are described for illustrative purposes only, without suggesting any limitation to the scope of the disclosure.

Some example embodiments of the disclosure are described hereinafter with continued reference to the drawings.

### Example Interaction

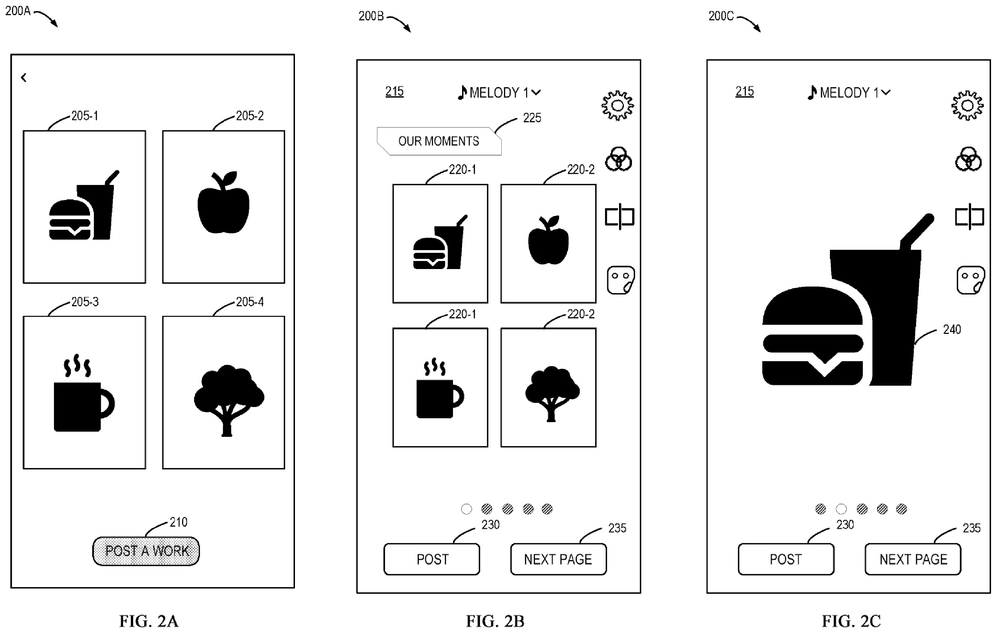

An example interaction process according to some embodiments of the disclosure is described below with reference to Fig. 2A to Fig. 2C. Fig. 2A to Fig. 2C show example interfaces 200A to 200C according to some embodiments of the disclosure. The interfaces 200A to 200C may be provided by the electronic device 110 shown in Fig. 1.

As shown in Fig. 2A, the interface 200A may correspond to a viewing interface associated with a media content type, which is also referred to as a target interface. As shown in Fig. 2A, the electronic device 110 may display a set of works associated with the media content type in the interface 200A, for example, work 205-1, work 205-2, work 205-3, and work 205-4 (individually or collectively referred to as work). As an example, the electronic device 110 may also present more works corresponding to the type based on a swiping operation of the user.

In some embodiments, the work 205 may be any appropriate type of work having visual content, for example, an image work, an album work, a video work, and the like.

In some embodiments, the media content type may indicate a public attribute of the work. For example, the work type corresponding to the interface shown in Fig. 2A may indicate that the set of works 205 has a first public attribute, indicating that the set of works 205 is only visible to a user having a preset relationship with the poster.

In some embodiments, the set of works 205 may include a work posted by a current user. Additionally, the set of works 205 may also include works posted by other users. For example, the work 205-4 may be a work posted by another user and having the first public attribute, and the work 205-4 is accessible by the current user.

Further, as shown in Fig. 2A, the electronic device 110 may also provide a creation entry 210 in the interface 200A. After receiving a selection of the creation entry 210, the electronic device 110 may present the interface 200B shown in Fig. 2B.

In the interface 200B, the electronic device 110 may provide media content 215, which may be generated based on a plurality of works in the set of works 205.

Taking Fig. 2B as an example, the media content 215 may be, for example, an album work and may include an image presented in the interface 200B, which is also referred to as a target image. In some cases, the target image may be, for example, a cover image of the album work.

In some embodiments, the target image may include visual elements corresponding to the plurality of works in the set of works 205, for example, visual element 220-1, visual element 220-2, visual element 220-3, and visual element 220-4 (individually or collectively referred to as visual element 220). For example, the visual elements 220-1 to 220-4 may correspond to the visual content of the works 205-1 to 205-4, respectively. The visual content may be a thumbnail or at least part of an image of the work.

Taking an image work as an example, the visual element 220 may be an image or a part of an image in a corresponding image work. Taking a video work as an example, the video element 220 may be a specific image frame or a part of an image frame of a corresponding video work.

In some embodiments, the plurality of works for generating the media content may include one or more works selected by the user. For example, the electronic device 110 may determine the plurality of works for generating the media content 205 based on a selection operation of the user for one or more works in the set of works 205.

In some embodiments, the plurality of works for generating the media content may include at least one work determined according to a preset attribute of the set of works 205.

In some embodiments, the preset attribute of the set of works 205 may include the number of the set of works 205. As an example, the electronic device 110 may determine the plurality of works for generating the media content based on a comparison of the number of the set of works 205 with one or more threshold numbers. For example, if the number of the set of works 205 is greater than the preset number, the electronic device 110 may automatically determine the preset number of works from the set of works 205 for generating the media content.

As another example, the electronic device 110 may also determine the plurality of works based on a matching of the number of the set of works 205 with a plurality of preset intervals. For example, in the case where the electronic device 110 determines that the number of works is less than a first number, all the works may be used for generating the media content.

In the case where it is determined that the number of works reaches the first number but is less than a second number, the electronic device 110 may determine, for example, the first number of works from the set of works 205 for generating the media content.

In the case where it is determined that the number of works reaches the second number but is less than a third number, the electronic device 110 may determine, for example, the second number of works from the set of works 205 for generating the media content.

It would be appreciated that the specific number of intervals or the specific number of thresholds are only examples and are not intended to limit the disclosure.

In some embodiments, the electronic device 110 may also determine the plurality of works for generating the media content based on the posting time of the set of works 205. For example, the electronic device 110 may determine a predetermined number of works with the latest posting time from the set of works 205.

In some embodiments, the electronic device 110 may also determine the plurality of works for generating the media content based on the type of the set of works 205. For example, the electronic device 110 may determine the plurality of works matching a specific work type from the set of works 205. Such a work type may include any appropriate type, such as an image work, a video work, an album work, a work posted by the current user, a work posted by another user, and a work with different public attributes.

Continuing with reference to Fig. 2B, the plurality of visual elements 220 corresponding to the plurality of works may present a specific layout in the target image. In some embodiments, such a layout may include a preset layout. For example, the plurality of visual elements 220 may be arranged in a default two-column format.

In some embodiments, such a layout may be determined based on a user operation. For example, the electronic device 110 may provide a plurality of candidate layouts for the user and may determine the layout of the plurality of visual elements 220 based on a selection of the user.

In some embodiments, such a layout may also be determined based on the plurality of visual elements 220 or the plurality of corresponding works 205. For example, with the user's knowledge and permission, the electronic device 110 may adaptively determine the layout based on information such as the size, color, theme and the like of the plurality of visual elements 220.

In some embodiments, the layout of the plurality of visual elements 220 in the target image may also be determined based on an arrangement style of the plurality of corresponding works 205 in the target interface 200A, for example, so that the plurality of visual elements 220 may maintain a consistent arrangement style. For example, the target image may be a screenshot of the target interface 200A.

In some embodiments, the media content 215 may also include identification information 225. The identification information 225, for example, may indicate that the media content 215 is created based on the creation entry 210 in the target interface 200A. For example, the target interface 200A may be an information flow interface associated with the media content type, and the target interface 200A includes both works posted by the current user and works posted by other users. Accordingly, the identification information may use the phrase "Our Moment" to indicate that the plurality of visual elements 220 in the media content 215 come from the works posted by a plurality of users.

It would be appreciated that such identification information 225 may be displayed, for example, in a specific image (e.g., a cover image) of the media content or other appropriate images.

In some embodiments, taking the media content 215 as an example of the album work, the album work may also include a plurality of images corresponding to the plurality of works 205 for generating the media content 215.

As shown in Fig. 2C, the electronic device 110 may present another image 240 in the media content 215 based on the swiping operation of the user. The image 240 may correspond to the work 205-1 in the plurality of works for generating the media content 215.

In some embodiments, the plurality of images corresponding to the plurality of works may be displayed in the media content 215 in a predetermined order. For example, the predetermined order may be determined based on the display order of the plurality of works in the target interface 200A.

In this way, the embodiments of the disclosure are able to support the user in quickly creating a new work based on multiple posted works and express content of the multiple works simultaneously, thereby improving the efficiency of content sharing.

In some embodiments, the electronic device 110 may also support the user in adjusting or editing the provided media content 215.

In some embodiments, the electronic device 110 may receive adjustments from the user for a plurality of images corresponding to the plurality of works in the album work and may update the target image in the album work accordingly.

In some examples, the electronic device 110 may receive an operation for adjusting the order of the plurality of images in the album work. For example, the electronic device 110 may move the image 240 to the end of the album based on the adjustment by the user. Accordingly, the electronic device 110 may adjust the target image based on the updated order, for example, to change the display position of the corresponding visual element 220-1 in the target image.

In some embodiments, the electronic device 110 may also receive an operation for adding a new image. For example, the electronic device 110 may receive a selection from the user of an additional work and add an image corresponding to the additional work to the album work 215. Accordingly, the electronic device 110 may update the target image based on the added image, for example, to enable the target image to include a visual element corresponding to the selected additional work.

In some embodiments, the electronic device 110 may also receive an operation for deleting an existing image. For example, the electronic device 110 may receive the deletion operation from the user of the image 240 and may update the target image accordingly, for example, to enable the target image to remove the corresponding visual element 220-1.

In some embodiments, the electronic device 110 may also receive an operation for replacing a specific work in the plurality of works. For example, the electronic device 110 may receive a selection from the user of a specific work and use the specific work to replace the work 205-1. Accordingly, the electronic device 110 may, for example, replace the image 240 with an image corresponding to the specific work and update the target image accordingly to enable the target image to include a visual element corresponding to the specific work.

Based on this manner, the embodiments of the disclosure are able to further provide the flexibility of work creation.

In some embodiments, the target image provided by the electronic device 110 may also include, for example, a target visual element generated based on work information of the plurality of works. For example, with a related user's knowledge and permission, the electronic device 110 may also display, for example, more visual elements in the target image to indicate information such as the theme, posting time, and posting user of the set of works.

Further, as shown in Fig. 2B and Fig. 2C, the electronic device 110 may also provide a posting entry 230 and an entry 235 for further editing other information of the work.

As an example, the electronic device 110 may post the corresponding media content 215 based on a selection of the posting entry 230. Alternatively, the electronic device 110 may also receive input of other information about the work based on a selection of the entry 235, for example, a title of the work, a label of the work, and so forth.

In some embodiments, different from the examples shown in Fig. 2B and Fig. 2C, the media content provided by the electronic device 110 may include, for example, a video work. Accordingly, the video work may include, for example, a target image frame (i.e., a target image), and the target image frame may have the same style as the target image shown in Fig. 2B, for example. The process for generating and adjusting the target image frame may refer to the process described above for the target image, and details are not described herein again.

In some embodiments, the video work may also include, for example, images corresponding to the plurality of works for generating the video work. Similar to the album work, the video work may include, for example, a plurality of video frames corresponding to the plurality of works.

In some embodiments, the video work may be created based on a preset video template. Such a video template may indicate, for example, a display style of an image frame or a switching style between different image frames.

Alternatively, the video work may be created based on a video template specified by the user. For example, the electronic device 110 may provide a plurality of candidate video templates for the user to select and may create the video work based on a target video selected by the user.

Alternatively, the video work may also be determined based on, for example, the plurality of works or a plurality of images corresponding to the plurality of works. For example, the electronic device 110 may automatically determine the corresponding video template based on the theme of the plurality of works.

The creation and posting of works are discussed above based on the example of the interface 200A associated with a specific work type. In some embodiments, the electronic device 110 may also provide a corresponding creation entry in other interfaces.

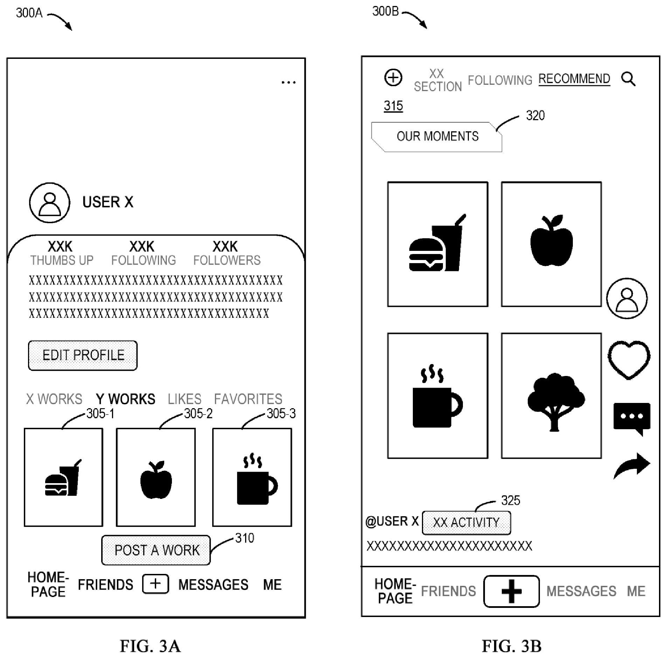

Fig. 3A shows an example interface 300A according to some embodiments of the disclosure. The interface 300 may be, for example, an interface associated with the current user, for example, the personal homepage of the current user.

As shown in Fig. 3A, in the interface 300A, the electronic device 110 may display works associated with different types of works (for example, " work X" and " work Y"). For example, " work X" and " work Y" may correspond to works with different public attributes. For example, the " work X" may correspond to a work visible to all users, and the " work Y" may correspond to a work only visible to a user having a preset relationship with the poster. Alternatively, the " work X" may also include all works posted by the current user.

As an example, in the case of receiving a selection for the " work Y", the electronic device 110 may present a set of works, for example, work 305-1, work 305-2, and work 305-3 (individually or collectively referred to as work 305). Different from the work 205, the works 305 displayed in the interface 300A may all be posted by the current user, for example.

Further, the electronic device 110 may also provide a creation entry 310 in the interface 300A. Similar to the content described above for the creation entry 210, the electronic device 110 may create media content based on a plurality of works in the set of works 305.

Reference may be made to the content described above for the creation, adjustment and posting process of the media content, and details are not described herein again.

In some embodiments, the creation entry 210 and the creation entry 310 may correspond to different work creation templates. Such a work creation template may indicate, for example, a color theme, layout style, image effect, video effect, etc., of the work, so that different creation templates may correspond to different color themes, layout styles, image effects, and video effects.

In some embodiments, considering that the sources of works corresponding to the creation entry 210 and the creation entry 310 are different, the electronic device 110 may also display corresponding identification information in the media content created via different creation entries. For example, as discussed above, the media content 215 may include identification information 225 to indicate that the media content 215 may be created based on the creation entry 210.

As another example, the media content created based on the creation entry 310 may present other identification information different from the identification information 225, or may not present identification information.

Thus, the embodiments of the disclosure may make it more convenient for the user to perceive whether the created media content includes the content of the work posted by other users.

Further, as shown in Fig. 3B, the interface 300B may correspond to, for example, a viewing interface of the work 315. The work 315 may, for example, be created based on the process discussed above. The interface 300B may, for example, be presented by the electronic device 110 corresponding to any appropriate user (for example, other users different from the user who posts the work 315).

In some embodiments, the electronic device 110 may also provide identification information 320 or an entry 325 in the interface 300B. For example, the electronic device 110 may create new media content based on a selection of the identification information 320 or the entry 325 by a target user and based on a set of works associated with the target user.

As another example, the electronic device 110 may also present a corresponding activity page based on a selection of the identification information 320 or the entry 325 by the target user and provide a creation entry in the activity page. Further, the electronic device 110 may create new media content based on the selection of the creation entry by the target user and based on the set of works associated with the target user.

Similarly, the work 315 may also be created by the current user based on a preset operation in the viewing interface of other works of the same type (for example, a work automatically created by a plurality of posted works).

Based on the process described above, the embodiments of the disclosure are able to efficiently create new works based on a plurality of posted works and express the content of the plurality of works simultaneously.

### Example Process

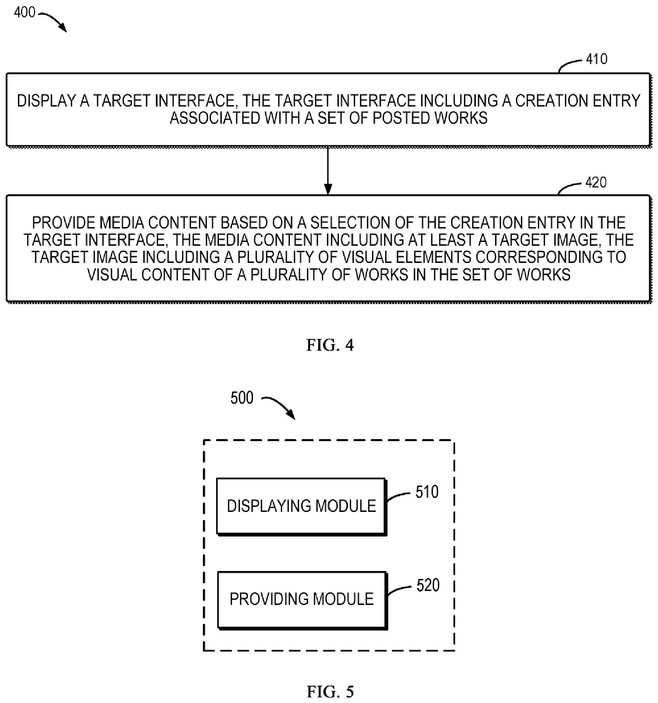

Fig. 4 shows a flowchart of an example process 400 for creating media content according to some embodiments of the disclosure. The process 400 may be implemented at the electronic device 110. The process 400 is described below with reference to Fig. 1.

At block 410, the electronic device 110 displays a target interface, the target interface including a creation entry associated with a set of posted works.

At block 420, the electronic device 110 provides media content based on a selection of the creation entry in the target interface, the media content including at least a target image, the target image including a plurality of visual elements corresponding to visual content of a plurality of works in the set of works.

In some embodiments, the media content is an album work, the album work further including a plurality of images corresponding to the plurality of works.

In some embodiments, the process 400 further includes: updating the target image in the album work based on an adjustment for the plurality of images.

In some embodiments, the adjustment includes at least one of: adjusting an order of the plurality of images in the album work; adding a new image to the album work, the new image corresponding to a designated work in the set of works; deleting at least one of the plurality of images; or replacing at least one of the plurality of works to replace a corresponding image in the plurality of images.

In some embodiments, a layout of the plurality of visual elements in the target image is determined based on at least one of: a preset first layout, a second layout specified by a user, or a third layout determined based on the plurality of works or the plurality of visual elements.

In some embodiments, the layout of the plurality of visual elements is determined based on an arrangement style of the plurality of works in the target interface.

In some embodiments, the target image further includes a target visual element generated based on work information of the plurality of works.

In some embodiments, the media content includes a video work, the target image is a video frame of the video work, and the video work is created based on at least one of: a preset first video template, a second video template specified by a user, or a third video template determined based on the plurality of works or the plurality of visual elements.

In some embodiments, the set of works corresponds to a first public attribute, the media content corresponds to a second public attribute, and the first public attribute indicates that the set of works is only visible to a group of users having a preset relationship with a poster.

In some embodiments, the plurality of works include at least one work selected by a user from the set of works, or at least one work determined according to a preset attribute of the set of works.

In some embodiments, the preset attribute includes at least one of: a number of the set of works, a posting time of the set of works, or a type of the set of works.

In some embodiments, the target interface also displays the set of works.

In some embodiments, the target interface includes a first target interface associated with a current user, and the set of works are posted by the current user; or a second target interface associated with a media content type, and the set of works include at least one work posted by a target user and corresponding to the media content type, the target user being different from the current user.

In some embodiments, the first target interface corresponds to a first creation entry, the second target interface corresponds to a second creation entry, and the first creation entry and the second creation entry correspond to different work creation templates.

In some embodiments, the media content created via the first creation entry includes first identification information corresponding to the first creation entry; and/or the media content created via the second creation entry includes second identification information corresponding to the second creation entry.

In some embodiments, the target interface is a viewing interface of a third work, and the third work corresponds to a preset work type.

### Example Apparatus and Device

The embodiments of the disclosure also provide a corresponding apparatus for implementing the above method or process. Fig. 5 shows a schematic structural block diagram of an example apparatus 500 for creating media content according to some embodiments of the disclosure. The apparatus 500 may be implemented as or included in the electronic device 110. Each module/component in the apparatus 500 may be implemented by hardware, software, firmware, or any combination thereof.

As shown in Fig. 5, the apparatus 500 includes a displaying module 510 configured to display a target interface including a creation entry associated with a set of posted works; and a providing module 520 configured to provide media content based on a selection of the creation entry in the target interface, the media content including at least a target image, the target image including a plurality of visual elements corresponding to visual content of a plurality of works in the set of works.

In some embodiments, the media content is an album work, the album work further including a plurality of images corresponding to the plurality of works.

In some embodiments, the apparatus 500 also includes an updating module configured to update the target image in the album work based on an adjustment for the plurality of images.

In some embodiments, the adjustment includes at least one of: adjusting an order of the plurality of images in the album work; adding a new image to the album work, the new image corresponding to a designated work in the set of works; deleting at least one of the plurality of images; or replacing at least one of the plurality of works to replace a corresponding image in the plurality of images.

In some embodiments, a layout of the plurality of visual elements in the target image is determined based on at least one of: a preset first layout, a second layout specified by a user;

a third layout determined based on the plurality of works or the plurality of visual elements.

In some embodiments, the layout of the plurality of visual elements is determined based on an arrangement style of the plurality of works in the target interface.

In some embodiments, the target image further includes a target visual element generated based on work information of the plurality of works.

In some embodiments, the media content includes a video work, the target image is a video frame of the video work, and the video work is created based on at least one of: a preset first video template, a second video template specified by a user, or a third video template determined based on the plurality of works or the plurality of visual elements.

In some embodiments, the set of works corresponds to a first public attribute, the media content corresponds to a second public attribute, and the first public attribute indicates that the set of works is only visible to a group of users having a preset relationship with a poster.

In some embodiments, the plurality of works include at least one work selected by a user from the set of works, or at least one work determined according to a preset attribute of the set of works.

In some embodiments, the preset attribute includes at least one of: a number of the set of works, a posting time of the set of works, or a type of the set of works.

In some embodiments, the target interface also displays the set of works.

In some embodiments, the target interface includes a first target interface associated with a current user, and the set of works are posted by the current user; or a second target interface associated with a media content type, and the set of works include at least one work posted by a target user and corresponding to the media content type, the target user being different from the current user.

In some embodiments, the first target interface corresponds to a first creation entry, the second target interface corresponds to a second creation entry, and the first creation entry and the second creation entry correspond to different work creation templates.

In some embodiments, the media content created via the first creation entry includes first identification information corresponding to the first creation entry; and/or the media content created via the second creation entry includes second identification information corresponding to the second creation entry.

In some embodiments, the target interface is a viewing interface of a third work, and the third work corresponds to a preset work type.

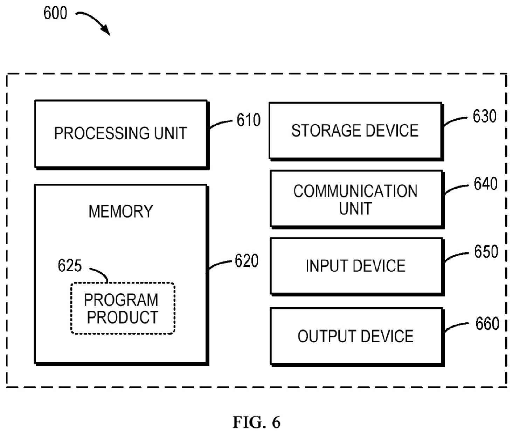

Fig. 6 shows a block diagram of an electronic device 600 in which one or more embodiments of the disclosure may be implemented. It would be appreciated that the electronic device 600 shown in Fig. 6 is only illustrative and should not constitute any limitation on the functions and scope of the embodiments described herein. The electronic device 600 shown in Fig. 6 may be used to implement the electronic device 110 of Fig. 1.

As shown in Fig. 6, the electronic device 600 is in the form of a general-purpose electronic device. The components of the electronic device 600 may include, but are not limited to, one or more processors or processing units 610, a memory 620, a storage device 630, one or more communication units 640, one or more input devices 650, and one or more output devices 660. The processing unit 610 may be an actual or virtual processor and may execute various processes based on the programs stored in the memory 620. In a multi-processor system, multiple processing units execute computer executable instructions in parallel to improve the parallel processing capability of the electronic device 600.

The electronic device 600 typically includes multiple computer storage medium. Such medium may be any available medium that is accessible to the electronic device 600, including, but not limited to, volatile and non-volatile medium, removable and non-removable medium. The memory 620 may be a volatile memory (for example, a register, cache, a random access memory (RAM)), a non-volatile memory (such as a read-only memory (ROM), an electrically erasable programmable read-only memory (EEPROM), a flash memory), or any combination thereof. The storage device 630 may be any removable or non-removable medium, and may include a machine-readable medium such as a flash drive, a disk, or any other medium, which may be used to store information and/or data and may be accessed within the electronic device 600.

The electronic device 600 may further include additional removable/non-removable, volatile/non-volatile memory medium. Although not shown in Fig. 6, a disk driver for reading from or writing to a removable, non-volatile disk (e.g., a "floppy disk"), and an optical disk driver for reading from or writing to a removable, non-volatile optical disk may be provided. In these cases, each driver may be connected to the bus (not shown) by one or more data medium interfaces. The memory 620 may include a computer program product 625 having one or more program modules configured to perform various methods or acts of the various embodiments of the disclosure.

The communication unit 640 enables communication with other electronic devices through a communication medium. Additionally, the functions of the components of the electronic device 600 may be implemented by a single computing cluster or multiple computing machines, which may communicate through communication connections. Therefore, the electronic device 600 may use a logical connection with one or more other servers, a network personal computer (PC) or another network node to operate in a networked environment.

The input device 650 may be one or more input devices, such as a mouse, a keyboard, a tracking ball, etc. The output device 660 may be one or more output devices, such as a display, a speaker, a printer, etc. The electronic device 600 may also communicate with one or more external devices (not shown) such as a storage device and a display device, as needed, through the communication unit 640, communicate with one or more devices that enable the user to interact with the electronic device 600, or communicate with any devices (e.g., a network card, a modem, etc.) that enable the electronic device 600 to communicate with one or more other electronic devices. Such communication may be performed via input/output (I/O) interfaces (not shown).

According to an illustrative embodiment of the disclosure, there is provided a computer-readable storage medium having computer executable instructions stored thereon, where the computer executable instructions are executed by a processor to implement the method described above. According to an illustrative embodiment of the disclosure, there is further provided a computer program product tangibly stored on a non-transitory computer-readable medium and including computer executable instructions, where the computer executable instructions are executed by a processor to implement the method described above.

Various aspects of the disclosure are described herein with reference to flowcharts and/or block diagrams of methods, apparatuses, devices and computer program products implemented according to the disclosure. It would be appreciated that each block of the flowcharts and/or block diagrams, and combinations of the blocks in the flowcharts and/or block diagrams, may be implemented by computer-readable program instructions.

These computer-readable program instructions may be provided to a processing unit of a general-purpose computer, a special-purpose computer, or other programmable data processing apparatus to produce a machine, such that the instructions, when executed by the processing unit of the computer or other programmable data processing apparatus, produce an apparatus for implementing the functions/acts specified in one or more blocks of the flowcharts and/or block diagrams. These computer-readable program instructions may also be stored in a computer-readable storage medium, these instructions cause a computer, a programmable data processing apparatus, and/or other devices to work in a specific manner, and thus the computer-readable medium storing the instructions includes an article of manufacture, which includes instructions for implementing various aspects of the functions/acts specified in one or more blocks of the flowcharts and/or block diagrams.

The computer-readable program instructions may be loaded onto a computer, another programmable data processing apparatus, or other devices, so that a series of operations and steps are performed on the computer, the other programmable data processing apparatus, or the other devices to generate a computer-implemented process, such that the instructions executed on the computer, the other programmable data processing apparatus, or the other devices implement the functions/acts specified in one or more blocks of the flowcharts and/or block diagrams.

The flowcharts and block diagrams in the drawings illustrate the possibly implemented architectures, functions, and operations of the systems, methods and computer program products according to multiple embodiments of the disclosure. In this regard, each block in the flowchart or block diagrams may represent a module, a program segment, or a portion of instructions, which includes one or more executable instructions for implementing the specified logical functions. In some alternative embodiments, the functions marked in the blocks may also occur in an order different from that marked in the drawings. For example, two consecutive blocks may actually be performed substantially in parallel, or they may sometimes be performed in the reverse order, depending on the functions involved. It would also be noted that each block of the block diagrams and/or flowcharts, and combinations of the blocks in the block diagrams and/or flowcharts may be implemented by a special-purpose hardware-based system that perform the specified functions or acts, or may be implemented by a combination of special-purpose hardware and computer instructions.

The embodiments of the disclosure have been described above, and the above description is illustrative, non-exhaustive, and not limited to the disclosed embodiments. Many modifications and variations will be apparent to those of ordinary skill in the art without departing from the scope and spirit of the described embodiments. The terminology used herein is chosen to best explain the principles of the embodiments, the practical application or improvements to the technology in the market, or to enable other those of ordinary skill in the art to understand the embodiments disclosed herein.

## Claims

1. A method for creating media content, comprising:
displaying a target interface, the target interface comprising a creation entry associated with a set of posted works; and
providing media content based on a selection of the creation entry in the target interface, the media content comprising at least a target image, the target image comprising a plurality of visual elements corresponding to visual content of a plurality of works in the set of works.

2. The method of claim 1, wherein the media content is an album work, the album work further comprising a plurality of images corresponding to the plurality of works.

3. The method of claim 2, further comprising:
updating the target image in the album work based on an adjustment for the plurality of images.

4. The method of claim 3, wherein the adjustment comprises at least one of:
adjusting an order of the plurality of images in the album work;
adding a new image to the album work, the new image corresponding to a designated work in the set of works;
deleting at least one of the plurality of images; or
replacing at least one of the plurality of works to replace a corresponding image in the plurality of images.

5. The method of claim 1, wherein a layout of the plurality of visual elements in the target image is determined based on at least one of:
a preset first layout;
a second layout specified by a user; or
a third layout determined based on the plurality of works or the plurality of visual elements.

6. The method of claim 5, wherein the layout of the plurality of visual elements is determined based on an arrangement style of the plurality of works in the target interface.

7. The method of claim 1, wherein the target image further comprises a target visual element generated based on work information of the plurality of works.

8. The method of claim 1, wherein the media content comprises a video work, the target image is a video frame of the video work, and the video work is created based on at least one of:
a preset first video template;
a second video template specified by a user; or
a third video template determined based on the plurality of works or the plurality of visual elements.

9. The method of claim 1, wherein the set of works corresponds to a first public attribute, the media content corresponds to a second public attribute, and the first public attribute indicates that the set of works is only visible to a group of users having a preset relationship with a poster.

10. The method of claim 1, wherein the plurality of works comprise:
at least one work selected by a user from the set of works; or
at least one work determined according to a preset attribute of the set of works.

11. The method of claim 10, wherein the preset attribute comprises at least one of:
a number of the set of works;
a posting time of the set of works; or
a type of the set of works.

12. The method of claim 1, wherein the target interface further displays the set of works.

13. The method of claim 12, wherein the target interface comprises:
a first target interface associated with a current user, and the set of works are posted by the current user; or
a second target interface associated with a media content type, and the set of works comprise at least one work posted by a target user and corresponding to the media content type, the target user being different from the current user.

14. The method of claim 13, wherein the first target interface corresponds to a first creation entry, the second target interface corresponds to a second creation entry, and the first creation entry and the second creation entry correspond to different work creation templates.

15. The method of claim 14, wherein the media content created via the first creation entry comprises first identification information corresponding to the first creation entry; and/or
the media content created via the second creation entry comprises second identification information corresponding to the second creation entry.

16. The method of claim 1, wherein the target interface is a viewing interface of a third work, the third work corresponding to a preset work type.

17. An apparatus for creating media content, comprising:
a displaying module configured to display a target interface, the target interface comprising a creation entry associated with a set of posted works; and
a providing module configured to provide media content based on a selection of the creation entry in the target interface, the media content comprising at least a target image, the target image comprising a plurality of visual elements corresponding to visual content of a plurality of works in the set of works.

18. An electronic device, comprising:
at least one processing unit; and
at least one memory coupled to the at least one processing unit and storing instructions executable by the at least one processing unit, the instructions, when executed by the at least one processing unit, causing the electronic device to perform the method of any of claims 1 to 16.

19. A computer-readable storage medium having a computer program stored thereon, the computer program being executable by a processor to perform the method of any of claims 1 to 16.
